(19) Europäisches Patentamt
European Patent Office
Office européen des brevets

(11) **EP 2 202 710 A1**

(12) **EUROPEAN PATENT APPLICATION**

(43) Date of publication:
**30.06.2010 Bulletin 2010/26**

(51) Int Cl.:
**G09B 9/02** *(2006.01)*

(21) Application number: **09180875.8**

(22) Date of filing: **29.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.12.2008 IT TO20081003**

(71) Applicant: **SELEX Galileo S.p.A.**
**CAMPI BISENZIO (FI) (IT)**

(72) Inventor: **Manetti, Valerio**
**34170 Gorizia (IT)**

(74) Representative: **Jorio, Paolo et al**
**Studio Torta S.r.l.**
**Via Viotti 9**
**10121 Torino (IT)**

(54) **Simulation of the dynamic behaviour of the motion of an autorotating rotor in an autogyro vehicle**

(57) Described herein is a computer-implemented method for simulating the dynamic behaviour of the motion of an autorotating rotor (3) in an autogyro vehicle (1). The method implements a consecutive series of simulation cycles, wherein each simulation cycle is configured to compute an aerodynamic lift (T) that can be generated by the autorotating rotor (3) as a function of a first parameter ($\lambda$) corresponding to a difference between the speed of the wind/air computed along the axis of rotation of the rotor (3) and an induced speed of the vehicle (Vi); a second parameter ($\mu$) corresponding to the speed of the wind/air along the plane of rotation of the rotor (3); a series of preset parameters (a, b, c, $\theta_0$, $\theta_1$, B) related to mechanical characteristics of the rotor (3); and a series of flapping coefficients ($a_0$, $a_1$, $a_2$, $b_1$, $b_2$) related to the flapping angle ($\beta$) of the blades (4) of the rotor (3).

Fig. 1

**Description**

The present invention relates to simulation of dynamic behaviour of the motion of an autorotating rotor in an autogyro vehicle and to the corresponding method of operation.

As is known, autogyro vehicles, which are typically referred to by the term "gyrocopters" are aircraft that basically comprise a fuselage that extends along a longitudinal axis, a rotor or rotating wing coupled mechanically to the fuselage through a hub so as to turn idle, i.e., in autorotation, about an axis of rotation perpendicular to the longitudinal axis under the action of the flow of air that impinges upon the rotor itself, and is in turn provided with a number of blades variable typically from two to four.

In greater detail, in the aforesaid autogyro vehicles provided with a rotor in so-called "autorotation", the latter, instead, of being driven by a driving motor, turns idle about the axis of rotation.

In the case in point, the blades of the rotor generate an aerodynamic lift to guarantee autorotation of the rotor and are structured in such a way as to have a low incidence with respect to the plate of the rotor, increased by the positive incidence of the plate with respect to the plane of thrust, whilst the propulsive thrust of the aircraft, i.e., of the autogyro vehicle, is generated by a propeller mounted typically on the rear side of the fuselage of the vehicle itself.

Consequently, in use, when the disk of the rotor is traversed by a flow of air directed from beneath upwards, the rotor starts to turn until it reaches an angular velocity of equilibrium. The rotation of the rotor generates aerodynamic lift, and at the same time the asymmetries of aerodynamic lift of the blades of the rotor in translational motion are balanced by the flapping motion of the blades themselves, while the resulting drive is centred along the axis of rotation of the wing itself.

It is moreover known that in recent times in the sector of production of autogyro vehicles, there has arisen the need to have available an electronic device that is able to simulate the dynamic behaviour of the motion of the rotor in autorotation, i.e., of the rotating wing of the autogyro vehicle, which is able to calculate the parameters that characterize the motion of the rotor in autorotation with a high precision, and at the same time requires a low computing power.

The aim of the present invention is hence to provide a computer-implemented method for simulating in a completely automatic way the dynamic behaviour of the motion of an autorotating rotor in an autogyro vehicle, which will be able to meet the aforesaid needs.

According to the present invention, a computer-implemented method for simulating the dynamic behaviour of the motion of an autorotating rotor in an autogyro vehicle is provided, as claimed in Claim 1 and preferably, but not necessarily, in any one of the claims depending directly or indirectly upon Claim 1.

Moreover, according to the present invention a software product is also provided, as claimed in Claim 18.

According to the present invention, an electronic device for simulating the dynamic behaviour of the motion of an autorotating rotor in an autogyro vehicle, is yet further provided, as claimed in Claim 19.

The present invention will now be described with reference to the annexed drawings, which illustrate a non-limiting example of embodiment thereof and in which:

- Figure 1 is a schematic illustration of an autogyro vehicle provided with a autorotating rotor;
- Figure 2 is a schematic illustration of an electronic device structured for simulating the dynamic behaviour of the motion of an autorotating rotor of an autogyro vehicle, built according to the teachings of the present invention;
- Figure 3 is a block diagram of a main processing module comprised in the electronic device illustrated in Figure 2;
- Figure 4 is a block diagram of an inertial/weighted computing stage comprised in the main processing module illustrated in Figure 3;
- Figure 5 shows a flowchart of the operations implemented by the method for simulating the dynamic behaviour of the motion of an autorotating rotor in an autogyro vehicle implemented by the device illustrated in Figure 1;
- Figure 6 shows the set of the curves that reproduce the plot of $\nu$ as a function of $\eta$ as $\overline{\mu}$ varies;
- Figure 7 is a block diagram of a module for simulating the motion of an autorotating rotor according to a first possible variant embodiment; and
- Figure 8 is a block diagram of a module for simulating the motion of an autorotating rotor according to a second possible variant embodiment.

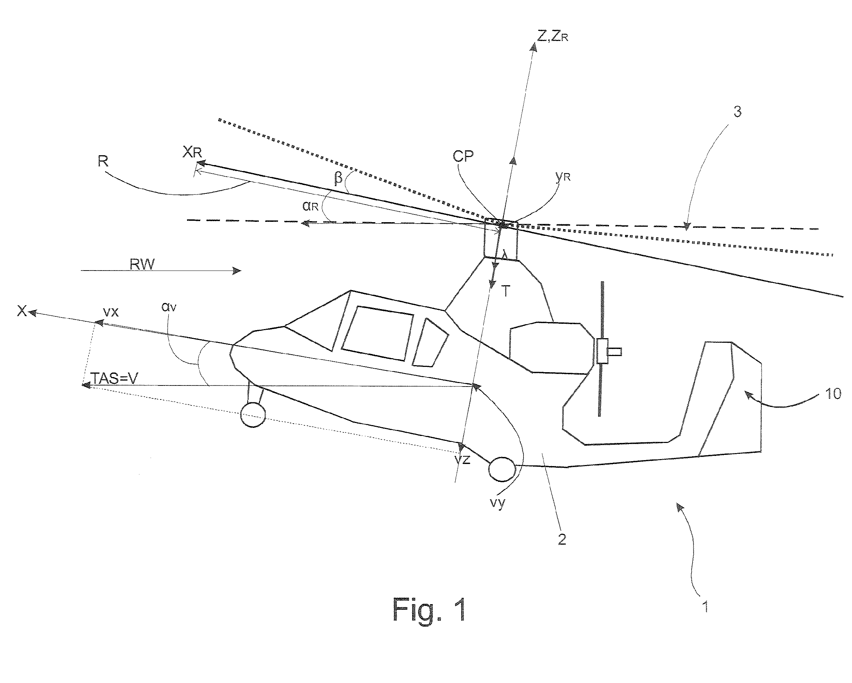

With reference to Figure 1 designated as a whole by 1 is an autogyro vehicle, which comprises a fuselage 2 that extends along a longitudinal axis X of a first cartesian vehicle reference system XYZ, a rotor 3 or rotating wing that extends in cantilever fashion from the fuselage 2 and is designed to turn idle, i.e., in autorotation, about an axis of rotation Y perpendicular to the longitudinal axis X, under the action of the flow of air RW that impinges upon the rotor itself, and is in turn provided with two or more blades 4.

In greater detail, indicated in Figure 1 is: the first cartesian, vehicle, reference system XYZ, where the longitudinal axis X lies in a vertical midplane of the autogyro vehicle 1, the axis Y (orthogonal to the plane of lie of the figure) lies in a plane orthogonal to the vertical midplane and extends perpendicular to the axis X, whereas the axis Z lies in the vertical midplane perpendicular to the axes X and Y; and a second cartesian, rotor, reference system $X_R$, $Y_R$, $Z_R$, in which the axis $X_R$ lies in a plane of lie of the rotor orthogonal to the midplane of the autogyro vehicle 1 and passing through the point CP of connection of the blades 4 to the hub of the rotor 3 itself, the axis $Z_R$ is the axis of rotation of the rotor and coincides with the axis Z, whereas the axis $Y_R$ (orthogonal to the plane of lie of the figure) extends orthogonal to the axes $X_R$ and $Z_R$ parallel to the axis Y.

Moreover indicated in Figure 1 are the following quantities that characterize the dynamic behaviour of the rotor 3 of the autogyro vehicle 1: TAS (acronymn for "True Air Speed") is a vector quantity V representing the speed of the air/wind with respect to the autogyro vehicle 1; vx, vy and vz are the components of the velocity vector V = TAS along the axes X, Y and Z, respectively; $\Omega$ is a scalar quantity corresponding to the angular velocity of rotation of the rotor 3 of the autogyro vehicle 1; $\overline{T}$ is a vector quantity corresponding to the aerodynamic lift of the autogyro vehicle 1, which is oriented in a direction orthogonal to the plane of rotation of the blades 4; $\alpha v$ is the angle of attack of the autogyro vehicle 1 corresponding to the angle between the axis X and the velocity vector V projected on the midplane of the autogyro vehicle 1; $\alpha r$ is the angle of attack of the rotor 3 comprised between the axis $X_R$ and the velocity vector V projected on the plane of lie of the axes $X_R$, $Z_R$ corresponding to the plate of the rotor 3; $\theta_{CR}$ is the pitch-control angle of the rotor 3 (not illustrated); and $\varphi_{CR}$ is the roll-control angle of the rotor 3 itself (not illustrated).

In the ensuing treatment, it is assumed that, with a zero pitch-control angle of the rotor $\theta_{CR}$, i.e., $\theta_{CR} = 0$, and with a zero roll-control angle of the rotor $\varphi_{CR}$, i.e., $\varphi_{CR} = 0$, the axis $Z_R$ corresponds to the axis Z.

In this case, the relation $\alpha v = \alpha r = \alpha$ applies, where $\alpha$ is the angle between the axis X and the velocity vector V = TAS projected on the midplane corresponding to the plane of lie of the axes X and Y.

From what has been described above, the generic relation $\alpha r = \alpha v + \theta_{CR}$ thus applies.

Moreover indicated in Figure 1 are the following quantities: the quantity $\beta$ is the flapping angle of the rotor 3; $V_i$ is the speed of the air thrust from the rotor downwards along the axis of rotation $Z_R$; and $\lambda$ is the total speed of the air directed along the axis of rotation $Z_R$. In particular, $\lambda$ is the difference between the component of the speed V along the axis $Z_R$ and an induced speed Vi normalized to the peripheral velocity of the blade (described in detail hereinafter).

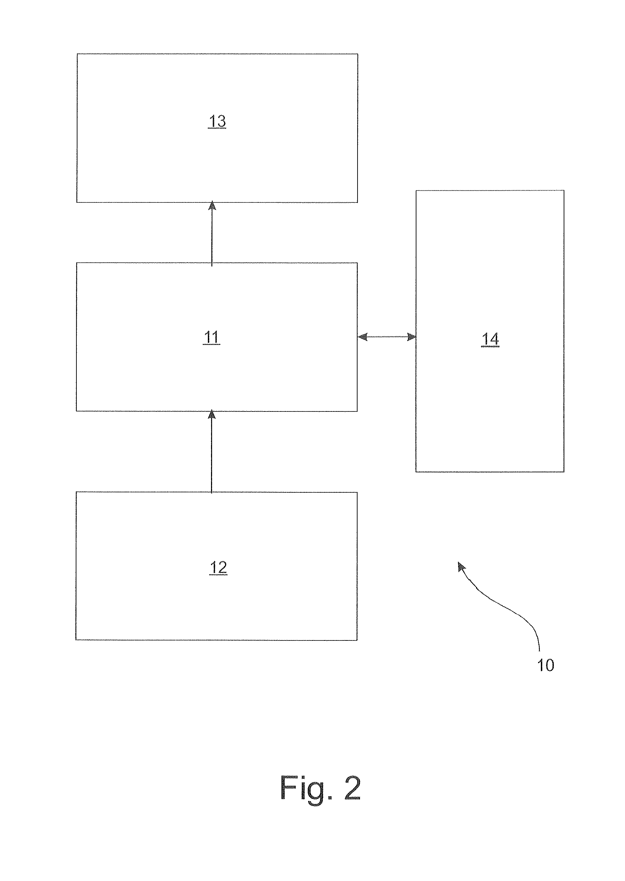

The present invention is essentially based upon the idea of simulating the dynamic behaviour of the motion of the rotor 3, i.e., of the rotating wing of an autogyro vehicle 1 similar to the vehicle represented in Figure 1, through an electronic apparatus 10 (illustrated in Figure 2), which is structured in such a way as to determine, at each simulation cycle, the quantities that characterize the dynamic behaviour of the motion of the rotor 3 in autorotation, and is able to update, via block 20, the parameter V corresponding to the true air speed (TAS) at which the autogyro vehicle is impinged upon by the air/wind, the angular velocity of rotation $\Omega$ of the rotor 3, and the angle of attack of the rotor $\alpha$.

The simulation implemented by the electronic apparatus 10 moreover envisages iterative determination, on the basis of the physical quantities referred to above, of: the value of the aerodynamic lift $\overline{T}$ developed by the rotor 3 in autorotation; the value of the mechanical momentum $M_{RG}$ generated by the rotor 3 itself; and the variation of angular velocity $\Delta\Omega$ of the rotor.

With reference to Figure 2, the electronic apparatus 10 comprises a main processing device 11 corresponding, for example, to a microprocessor or any similar processing/computing unit, designed to implement a simulation method (described hereinafter) to supply at output the aerodynamic lift $\overline{T}$ developed by the rotor 3 in autorotation, the value of the mechanical momentum $M_{RG}$ generated by the rotor 3 itself, and the variation of angular velocity $\Delta\Omega$ of the rotor 3.

The electronic apparatus 10 moreover comprises preferably, but not necessarily, a command-issuing device 12, for example a keyboard or any other type of similar command-issuing device to enable a user to impart a series of initialization quantities on the main processing device 11, a display device 13, for example a monitor connected to the main processing device 11 for displaying at least the parameters $\overline{T}$, $M_{RG}$, $\Omega$ $\Delta\Omega$ determined by the simulation, and preferably, but not necessarily, a memory device 14 designed to store a plurality of data and parameters determined through the processing/computing operations implemented by the main processing device 11 in the course of the simulation method.

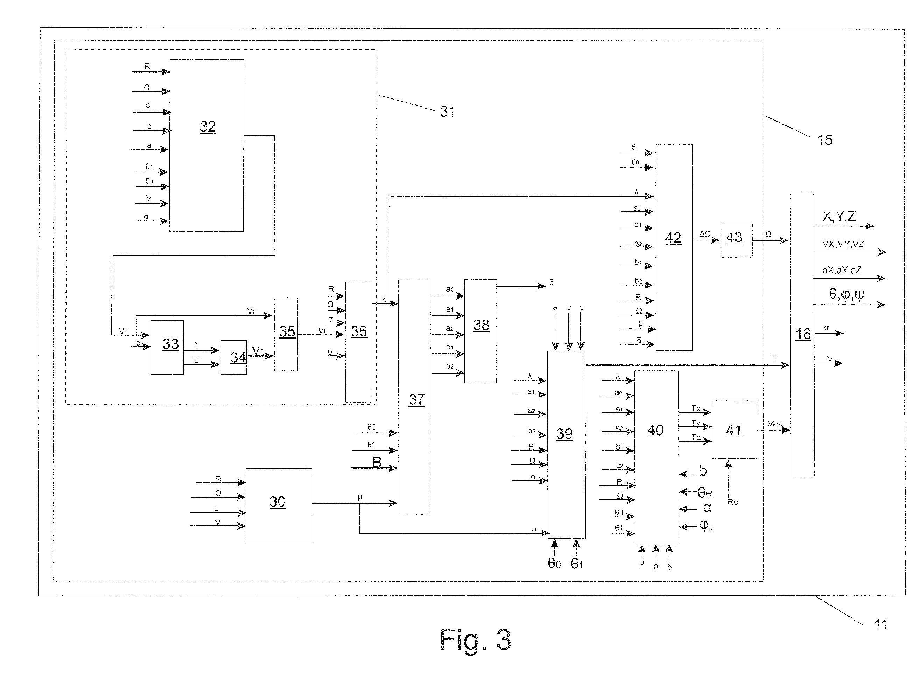

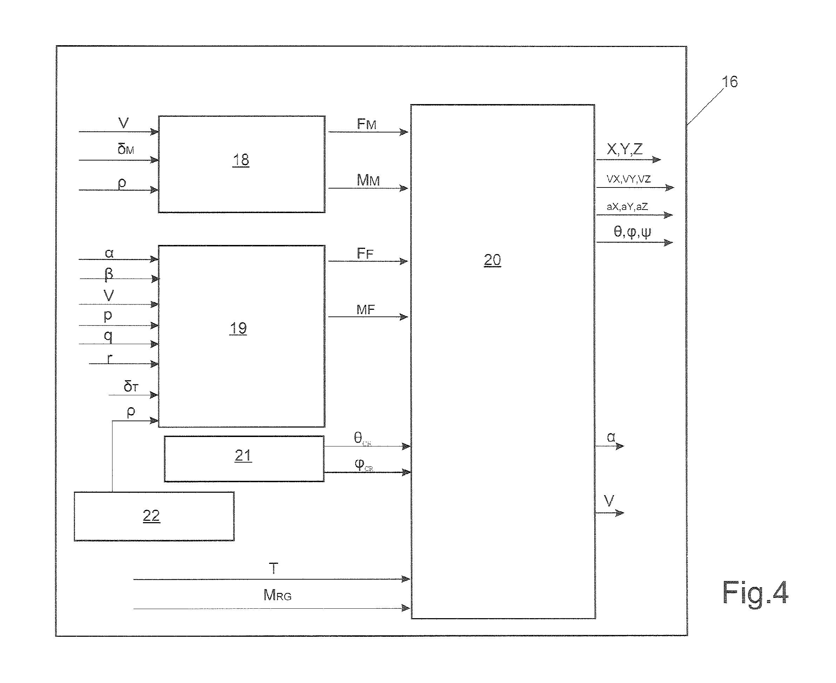

With reference to Figure 3, the main processing device 11 comprises: a module for simulating the rotary motion of a rotor 15 of an autogyro vehicle (described in detail hereinafter) and an inertial/weight-based computing stage 16, which, in the example illustrated in Figure 4, in turn comprises a module for simulating the engine 18; a module for simulating the aerodynamic structure of the fuselage 19; an module for inertial/weight-based processing of the autogyro vehicle 20; an actuator module 21; and an air-sensing module 22.

In detail, the module for simulating the engine 18 receives at input V, $\rho$, which is the density of the air, and a quantity $\delta_M$, which is a value correlated to the performance of the motor in terms of r.p.m./power, and supplies at output a vector quantity $\overline{FM}$ indicating the force generated by the engine of the autogyro vehicle 1, and a vector quantity $\overline{MM}$ indicating the mechanical momentum generated by the engine.

As regards, instead, the module for simulating the aerodynamic structure of the fuselage 19, it receives at input the parameters V, $\alpha$, $\beta$, $\rho$, the parameters p, q and r corresponding to the three components of the angular velocity of the autogyro vehicle 1 projected on the three axes X, Y and Z, and a parameter $\delta_T$ corresponding to the control angle of the tail rudder 10 of the autogyro vehicle 1. The module for simulating the aerodynamic structure of the fuselage 19 supplies at output a vector quantity $\overline{FF}$ indicating the aerodynamic force generated by the fuselage 2 of the autogyro vehicle 1 and a vector quantity $\overline{MF}$ indicating the aerodynamic mechanical momentum generated by the fuselage 2 itself.

As regards the actuator module 21, it supplies at output the pitch-control angle of the rotor $\theta_{CR}$ and the roll-control angle of the rotor $\varphi_{CR}$ itself on a series of commands imparted on the rotor 3, whilst the air-sensing module 22 is designed to supply at output p corresponding to the density of the air.

As regards, instead, the inertial/weight-based processing module of the autogyro vehicle 20, it receives at input: the pitch-control angle of the rotor $\theta_{CR}$; the roll-control angle of the rotor $\varphi_{CR}$; the force **FM** generated by the engine; the mechanical momentum **MM** generated by the engine; the aerodynamic force generated by the aerodynamic structure of the fuselage $\overline{FF}$; the mechanical momentum $\overline{MF}$ generated by the aerodynamic structure of the fuselage; and the aerodynamic lift $\overline{T}$ generated by the rotor of the autogyro vehicle.

The inertial/weight-based processing module 20 is structured for processing the quantities referred to above received at input to supply at output, as a function thereof, the following parameters: the instantaneous positions xi, yi, ti of the autogyro vehicle 1 determined with respect to a preset ground reference system; the components vx, vy, vz of the speed of the autogyro vehicle determined with respect to the preset vehicle reference system XYZ; the components ax, ay, az of the acceleration of the autogyro vehicle 1 determined with respect to the preset vehicle reference system XYZ; the angles $\theta$, $\varphi$ and $\Psi$ that make it possible to pass from the ground reference system to the vehicle reference system XYZ; the components of the angular velocity p, q and r with respect to the vehicle reference system XYZ; the angles of attack $\alpha$ and of flapping/yaw $\beta$; and the parameter V corresponding to the true air speed TAS.

The module for simulating the engine 18, the module for simulating the aerodynamic structure of the fuselage 19, the actuator module 21, the air-sensing module 22, and the inertial/weight-based processing module 20 do not form the subject of the present invention and consequently will not be described any further except to point out that the latter updates, in a known way, at rotor simulation each cycle, the value of the angles of attack $\alpha$, and the value of the parameter V indicating the true air speed, on the basis of the parameters $\overline{T}$, $\overline{FM}$, $\overline{MM}$, $\overline{FF}$ and $\overline{MF}$.

As regards, instead, the module for simulating the rotary motion of a rotor 15 in autorotation forming the subject of the present invention, it comprises a first computing block 30, which receives at input the quantities V, $\alpha$, updated by the inertial/weight-based processing module 20, the angular velocity $\Omega$, and a quantity R corresponding to the radius of the rotor 3, and supplies at output a quantity $\mu$ corresponding to the speed of the air/wind computed along the rotor plate corresponding to the plane of rotation of the rotor 3 and normalized with respect to a peripheral velocity $V_P$ of the rotor itself, which is determined via the relation $V_P = \Omega \cdot R$.

In particular, the first computing block 30 determines the parameter $\mu$ by implementing the following relation.

$$1) \quad \mu = V \cos \alpha / \Omega * R.$$

The module for simulating the rotary motion of a rotor in autorotation 15 moreover comprises a second computing block 31, which is designed to generate at output the value of $\lambda$ corresponding to the difference between the component of the speed V along the axis of rotation $Z_R$ and an induced speed Vi, computed along the axis of rotation $Z_R$ of the rotor 3, which is also normalized with respect to the peripheral velocity $V_P$ computed in turn through the relation $V_P = \Omega * R$.

In particular, the parameter $\lambda$ is given by

$$2) \quad \lambda = [(V \sin\alpha) - Vi]/\Omega * R$$

With reference to Figure 3, the second computing block 31 comprises a first processing stage 32, which is designed to receive at input: the quantity $\alpha$; a parameter $\theta_0$, corresponding to the angle of fitting of the blade 4 of the rotor 3 on the hub of the rotor itself; a parameter $\theta_1$ corresponding to the total angular variation of fitting of the blade 4 of the rotor 3 with respect to the hub of the rotor 3 itself; a parameter a, corresponding to the coefficient of aerodynamic lift of an infinitesimal portion of the blade 4 of the rotor 3; a parameter b, corresponding to the number of blades 4 of the rotor 3 (just one of which is illustrated in the example illustrated in Figure 1); a parameter c, corresponding to the mean chord of the blade 4 of the rotor 3; the radius R of the rotor 4; the angular velocity $\Omega$ of the rotor 3; and the relative speed V of the wind/air with respect to the autogyro vehicle 1.

The first processing stage 32 is designed to supply at output an induced speed of the rotor $V_H$ in conditions of hovering, i.e., in conditions of "stationary" vertical descent of the autogyro vehicle 1. In the case in point, the first processing stage 32 is designed to calculate the induced rotor speed $V_H$ in conditions of hovering via the following relation:

$$3) \quad V_H = \frac{abc\Omega}{16\pi} \left( \sqrt{1 + \left( \frac{64\pi}{abc} \left( \frac{R\vartheta_0}{3} + \frac{R\theta_1}{4} + \frac{V\sin\alpha}{2\Omega} \right) \right)} - 1 \right)$$

The second computing block 31 moreover comprises a second processing stage 33, which receives at input the induced rotor speed $V_H$ in hovering and the parameter $\alpha$, and supplies at output the parameter $\eta$ corresponding to the speed at which the autogyro vehicle 1 is impinged upon by the air/wind projected on the axis of rotation $Z_R$ and normalized with respect to the induced rotor speed $V_H$.

The second processing stage 33 is moreover designed to supply at output a parameter $\bar{\mu}$ corresponding to the speed at which the autogyro vehicle is impinged upon by the air/wind projected on the plane of rotation of the rotor 3, normalized with respect to the induced rotor speed $V_H$ in conditions of hovering.

In particular, the second processing stage 33 is designed to calculate the parameter $\eta$ and the parameter $\bar{\mu}$ through the relations:

$$4) \quad \eta = (V \sin\alpha)/V_H;$$

$$5) \quad \bar{\mu} = (V \cos\alpha)/V_H.$$

The second computing block 31 moreover comprises a third processing stage 34, which receives at input the parameters $\eta$ and $\bar{\mu}$ and supplies at output a parameter $v$ which can be determined through the relation $v = V_i/V_H$.
In particular, the third processing stage 34 is designed to process $\eta$ and $\bar{\mu}$ in such a way as to determine the value of the parameter $v_1$ that satisfies the following second degree equation:

$$6) \quad v_1 \sqrt{ \left( \frac{\eta}{2.71(1 + \bar{\mu}^2)} \right)^2 + \bar{\mu}^2 + (\eta + v_1)^2 } = 1$$

corresponding to

$$\eta^2 \left( 1 + \frac{1}{2{,}71(1 + \mu^2)^2} \right) + 2v\eta + \left( \bar{\mu}^2 + v_1^2 - \frac{1}{v_1^2} \right) = 0$$

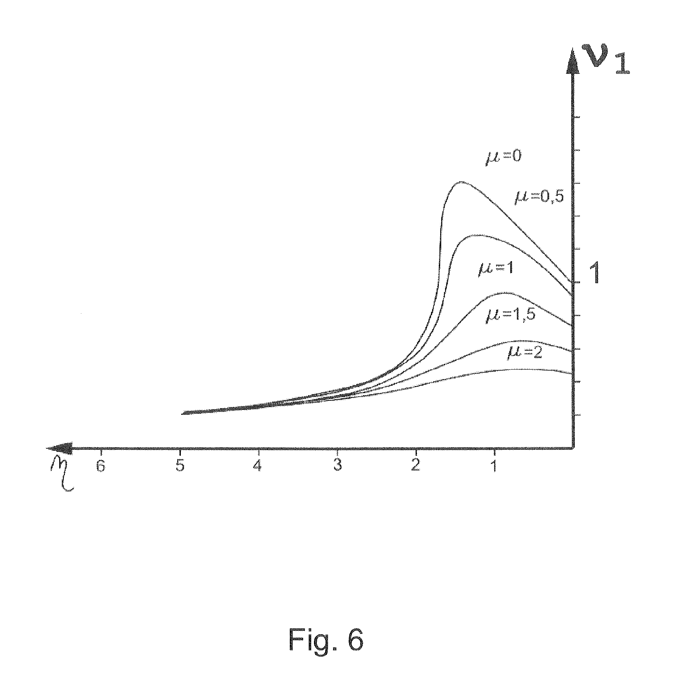

It should be pointed out that the third processing stage 34 can be structured for determine the value of the parameter $v_1$ through an interpolation of curves (which is illustrated in Figure 6) that reproduce the plot of $v_1$ as a function of $\eta$ as $\bar{\mu}$ varies. In particular, each curve graphically represents the second-degree relation 6), is associated to a value of $\bar{\mu}$, and represents the plot of $v_1$ as $\eta$ varies.

In use, the third processing stage 34 then executes an interpolation of the curves (illustrated in Figure 6) in such a way as to determine the value of $v_1$ that satisfies Eq. 6) appearing above. In the case in point, with reference to Figure 6, once the values of $\eta$ and $\bar{\mu}$ have been established, it is possible to trace a vertical straight line having abscissa $\eta$ that intersects the curve associated to $\bar{\mu}$ so as to determine the point of intersection, the value of which on the ordinate corresponds to $v_1$.

The second computing block 31 moreover comprises a fourth processing stage 35, which receives at input $v_1$ and the induced rotor speed $V_H$ in hovering conditions and supplies at output a parameter Vi corresponding to the induced speed in generic conditions, that is as V and $\alpha$ vary.

In particular, the fourth processing stage 35 determines the induced speed Vi via the following relation:

$$7) \quad V_i = V_H * \nu_1$$

The second computing block 31 moreover comprises a fifth processing stage 36, which receives at input the induced speed Vi, the radius R, the velocity $\Omega$, the angle $\alpha$, and the speed V, and generates at output $\lambda$, by implementing the following relation:

$$8) \quad \lambda = (V \sin\alpha - Vi) / \Omega R.$$

The module for simulating the rotary motion of a rotor in autorotation 15 moreover comprises a third computing block 37, which receives at input the parameters $\lambda$, p, $\theta_0$, $\theta_1$, a preset coefficient of efficiency B of the blade of the rotor having a value of less than 1, preferably comprised between approximately 0.95 and 0.96, and supplies at output a series of coefficients $a_0$, $a_1$, $a_2$, $b_1$, $b_2$ for calculation of the flapping angle $\beta$.
The third computing block 37 moreover receives at input a parameter $\gamma = c\rho aR^4/I$, where I is the inertia of the rotor and $\rho$ is the density of the air.
The third computing block 11 is designed to calculate the following coefficients:

$$9) \quad a_0 = \frac{1}{2}\gamma\left\{\frac{1}{3}\lambda B^3 - \frac{1}{4}\theta_0 B^4 - \frac{1}{5}\vartheta_1 B^5\right\};$$

$$10) \quad a_1 = -\frac{2\mu}{B^4}\left\{\lambda B^2 - \frac{4}{3}\theta_0 B^3 - \theta_1 B^4\right\};$$

$$11) \quad b_1 = -\frac{4\mu}{3B}a_0$$

$$12)$$
$$a_2 = -\frac{\gamma\mu^2}{144 + \gamma^2 B^8}\left\{\lambda B(16 + \frac{7}{108}\lambda^2 B^8) - \theta_0 B^2(\frac{46}{3} + \frac{7}{144}\lambda^2 B^8) - \theta_1 B^8(12 + \frac{7}{180}\gamma^2 B^8)\right\}$$

$$13) \quad b_2 = \frac{\lambda^2\mu^2}{144 + \lambda^2 B^8}\left\{\frac{5}{9}\lambda B^5 + \frac{25}{36}\theta_0 B^6 + \frac{8}{15}\theta_1 B^7\right\}$$

The module for simulating the rotary motion of a rotor in autorotation 15 moreover comprises a fourth computing block 38, which is designed to receive the coefficients $a_0$, $a_1$, $a_2$, $b_1$, $b_2$ and is designed to supply at output the flapping/yaw angle $\beta$.
In the case in point, the fourth computing block 38 processes the coefficients $a_0$, $a_1$, $a_2$, $b_1$, $b_2$ for calculating the flapping angle $\beta$ via the following relation:

$$14) \quad \beta = a_0 + a_1 * \cos\psi + b_1 * \sin\psi + a_2 * \cos 2\psi + b_2 * \sin 2\psi.$$

where $\psi$ is the instantaneous angle of rotation of the blades of the rotor.
In the above description it should be pointed out that the calculation of the flapping angle $\beta$ is made considering that the area of reverse flow in the receding blade gives a positive contribution to the aerodynamic lift $\overline{T}$.

The module for simulating the rotary motion of a rotor in autorotation 15 moreover comprises a fifth computing block 39, which receives at input the parameters a, b, c, $\lambda$, $\beta$, $\Omega$, $\alpha$, $a_0$, $a_1$, $a_2$, $b_1$, $b_2$, R, $\mu$, $\theta_0$, $\theta_1$ and supplies at output the aerodynamic lift T of the rotor computed along the axis of rotation $Z_R$ of the rotor 3 itself.

In particular, the fifth computing block 39 is designed to calculate the aerodynamic lift $\overline{T}$ of the rotor via the following relation:

15)

$$T = f(\lambda, \mu, \Omega) = 0.5 * bc\rho\Omega^2 R^3 \{ \frac{1}{2}\lambda(B^2 + \frac{1}{2}\mu^2) + \theta_0(\frac{1}{3}B^3 + \frac{1}{2}\mu^2 B - \frac{4}{9\pi}\mu^3) +$$

$$\theta_1(\frac{1}{4}B^4 + \frac{1}{4}\mu^2 B^2 - \frac{1}{32}\mu^4) + \frac{1}{4}\mu^2 b_2 B + \frac{1}{8}\mu^3 a_1 \}$$

The module for simulating the rotary motion of a rotor in autorotation 15 moreover comprises a sixth computing block 40, which receives at input the aerodynamic lift $\overline{T}$ of the rotor, a parameter $\theta_R$ corresponding to the angle of pitch of the rotor, and a parameter $\varphi_R$ corresponding to the angle of roll of the rotor itself, $\theta_0$, and $\theta_1$.

In particular, the three components $T_X$, $T_Y$ and $T_Z$ of the hydrodynamic-lift vector $\overline{T}$ with respect to the three axes X,Y and Z of the vehicle reference system 1 are computed via the following relations:

16)

$T_X = -K_T\sin\theta_R((\theta_0/3)(1 + 3/2(\mu^2)) + (\theta_1/4)(1 + \mu^2) + (\lambda/2) - 1/4\mu^2 b_2) + (K_T\cos\gamma(\theta_0(1/3a_1 + 1/2\mu(\lambda + 3/4b_2) - 1/8\mu^2 b_1) + 1/2\lambda((3/2)a_1 - 1/2\mu b_2) + (1/4)(a_1 b_2 - a_2 b_1) - (1/6)b_1 a_0 - (1/4)\mu(a_0 a_2 + a_0^2 + a_1^2 + ½(a_2^2 + b_2^2) - (1/4)\rho bc\delta\Omega^2 R^3\mu)\cos\theta_R$

17)

$T_Y = - K_T \sin \varphi_R (\theta_0/3(1 + (3/2)\mu^2) + (\theta_1/4)(1 + \mu^2) + (\lambda/2) -$

$(1/4)\mu^2 b_2)$
$- (K_T(\theta_0((1/3)b_1 + (1/4)\mu(a_0 + (5/4)a_2) + (1/2)\mu^2 b_1) - \lambda((1/2)$
$b_1 + \mu(a_0 + (1/2)a_2) + (1/6)(a_1 a_2 + b_1 b_2 -$
$a_0 a_1) + (1/2)\mu(2a_0 b_2 + (3/4)a_1 b_1)$
$+ (1/4)\mu^2(3a_0 a_1 + 2a_1 a_2 + 3/2a_0 b_1))\cos\varphi_R$

18)

$T_Z = T$

where $K_T = (1/2) \rho abc\Omega^2 R^3$

The module for simulating the rotary motion of a rotor in autorotation 15 moreover comprises a seventh computing block 41, which receives at input the three components $T_X$, $T_Y$ and $T_Z$ of the aerodynamic lift $\overline{T}$ and the parameter $R_G$ corresponding to the distance between the centre of gravity of the autogyro vehicle 1 and the centre of rotation of the rotor 3, and supplies at output the mechanical momentum $M_{RG}$ acting on the blade 4 of the rotor 3.

In particular, the seventh computing block 41 is designed to determine the mechanical momentum $M_{RG}$ via the following relation:

$$19) \quad M_{RG} \;=\; \overline{R}_G \;\wedge\; \overline{T}$$

where the hydrodynamic-lift vector T is computed via the relation:

$$\overline{T} \;=\; Tx\; i \;+\; Ty\; j \;+\; Tz\; k;$$

In the above description it should be pointed out that the calculation of the aerodynamic lift $\overline{T}$ and of the moment $M_{RG}$ is made considering that the area of reverse flow in the receding blade of the rotor gives a positive contribution to the aerodynamic lift $\overline{T}$.

The module for simulating the rotary motion of a rotor in autorotation 15 moreover comprises an eighth computing block 42, which receives at input $\theta_1$, $\theta_0$, $\lambda$, R, $\Omega$, $\mu$, $\delta$, $a_0$, $a_1$, $a_2$, $b_1$, $b_2$ and supplies at output the variation $\Delta\Omega$ of the velocity of rotation of the rotor, and a tenth computing block 43, which receives the variation $\Delta\Omega$ of the velocity of rotation of the rotor and supplies the velocity of rotation $\Omega$.

In particular, the eighth computing block 42 is designed to determine the variation $\Delta\Omega$ of the velocity $\Omega$ via the following relation:

$$21)$$

$$\lambda^2(\frac{1}{2}B^2 - \frac{1}{4}\mu^2) + \lambda(\frac{1}{3}\theta_0 B^3 + \frac{2}{9\pi}\mu^2\theta_0 + \frac{1}{4}\theta_- B^4 + \frac{1}{32}\mu^4\theta_1) + \mu\lambda a_1(\frac{1}{2}B^2 - \frac{3}{8}\mu^2) +$$

$$a_0{}^2(\frac{1}{4}\mu^2 B^2 - \frac{1}{16}\mu^4) - \frac{1}{3}\mu a_0 b_1 B^3 + a_1{}^2(\frac{1}{8}B^4 + \frac{1}{16}\mu^2 B^2) + b_1{}^2(\frac{1}{8}B^4 + \frac{1}{16}\mu^2 B^2) -$$

$$a_2(\frac{1}{4}\mu^2 a_0 B^2 + \frac{1}{6}\mu b_1 B^8) + \frac{1}{2}a_2 B^4 + b_2(\frac{1}{8}\mu^2\theta_0 B^2 + \frac{1}{12}\mu^2\theta_1 B^3 + \frac{1}{6}\mu a_1 B^3) +$$

$$\frac{1}{2}b_2 B^4 - \frac{\delta}{4a}(1 + \mu^2 - \frac{1}{8}\mu^4) = 2I(\frac{d\Omega / dt}{\Omega^2 R^4 abc\rho})$$

In the case in point, Eq. 21) can be represented in a simplified way via the following relations:

$$d\Omega/dt \;=\; K\; F(\lambda,\mu)$$

where $K = \frac{1}{2}\,\rho abc\Omega^2 R^4$

Consequently, if $\lambda$, $\mu$, and $\Omega$ computed during the simulation are known, the eighth computing block 42 calculates $\Delta\Omega = K\,F(\lambda,\mu)\,\Delta t$ (where $\Delta\Omega$, $\Delta t$ are preset increments having a discrete value). For example, the temporal increment $\Delta t$ can be a value of approximately 10 ms.

Once the variation $\Delta\Omega$ has been determined, the module for simulating the rotary motion of a rotor in autorotation 15 is able to determine through an integrator module 43 the angular velocity $\Omega$ of the rotor 3.

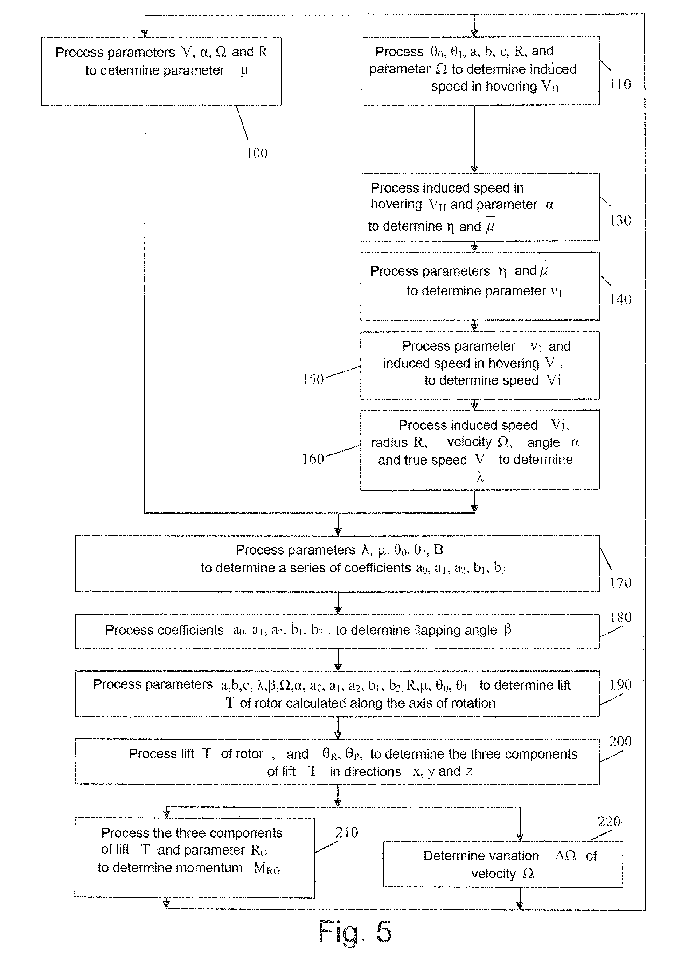

With reference to Figure 5, described hereinafter is the method for simulation of the dynamic behaviour of the motion of a rotor 3 in autorotation of an autogyro vehicle 1, implemented by the simulation module 15, in which it is assumed that in the initial calculation cycle of the simulation an initialization of the parameters $V = V_0$, $\alpha = \alpha_0$, $\Omega = \Omega_0$ has been carried out. In other words, it is assumed that the simulation of the dynamic behaviour of the motion of the rotor will be implemented starting from a preset initial condition of the rotor 3 itself.

In a first step, the first computing block 30 processes the parameters V, $\alpha$, and $\Omega$ and R so as to determine, through the relation 1), the parameter $\mu$ corresponding to the component of the speed of the air/wind V in the plane of rotation of the rotor 3 normalized at a peripheral velocity $V_P$ corresponding to $\Omega$*R of the rotor itself (block 100).

In the same first step, the first processing stage 32 processes $\theta_0$, $\theta_1$, a, b, V, c, R, and the parameter $\Omega$ to determine, through the relation 3), the induced rotor speed $V_H$ in conditions of hovering (block 110); the second processing stage 33 processes the induced rotor speed $V_H$ in hovering and the parameter $\alpha$ in order to determine through the relations 4) and 5) the parameter $\eta$ and the parameter $\overline{\mu}$ (block 130); the third processing stage 34 processes the parameters $\eta$ and $\overline{\mu}$ and determines the parameter $v_1$ that satisfies Eq. 6) (block 140); the fourth processing stage 35 processes the parameter $v_1$ and the induced rotor speed $V_H$ in hovering to determine, through the relation 7), the parameter Vi corresponding to the induced speed in generic conditions (block 150); whilst the fifth processing stage 36 processes the induced speed Vi, the radius R, the velocity $\Omega$, the angle $\alpha$, and the true air speed V and determines, through the relation 8), the parameter $\lambda$ (block 160). The first step is followed by a second step in which the third computing block 37 processes the parameters $\lambda$, $\mu$, $\theta_0$, $\theta_1$, B tp determine through the relations 9), 10), 11) 12) and 13) a series of coefficients $a_0$, $a_1$, $a_2$, $b_1$, $b_2$ for the calculation of the flapping/yaw angle $\beta$ (block 170).

The second step is followed by a third step in which the fourth computing block 38 processes the coefficients $a_0$, $a_1$, $a_2$, $b_1$, $b_2$ to determine, through the relation 14), the flapping/yaw angle $\beta$ (block 180).

At this point, the fifth computing block 39 processes the parameters a, b, c, $\lambda$, $\beta$, $\Omega$, $\alpha$, $a_0$, $a_1$, $a_2$, $b_1$, $b_2$, R, $\mu$, $\theta_0$, $\theta_1$ and determines, through the relation 15), the aerodynamic lift T of the rotor 3 computed along the axis of rotation $Z_R$ (block 190).

Once the aerodynamic lift $\overline{T}$ to be determined, the method envisages that the sixth computing block 40 will process the aerodynamic lift $\overline{T}$ itself of the rotor and the angles $\theta_R$, $\varphi_R$ so as to determine, through the relations 16), 17) and 18), the three components $T_X$, $T_Y$ and $T_Z$ along the axes X, Y and Z (block 200).

At this point, the seventh computing block 41 processes the three components $T_X$, $T_Y$ and $T_Z$ of the aerodynamic lift $\overline{T}$ and the parameter $R_G$ so as to determine, through the vector calculation 16), the momentum $M_{RG}$ (block 210).

In this step, the method is moreover designed to determine, through the relation 21), the variation $\Delta\Omega$ of the velocity $\Omega$ (block 220).

At this point, the cycle for simulating the dynamic behaviour of the rotor supplies the aerodynamic lift T(Tx, Ty, Tz) at input to the inertial/weight-based processing module 16, which updates, on the basis of the aerodynamic lift T itself and of $\overline{FM}$, $\overline{MM}$, $\overline{FF}$ and $\overline{MF}$, the parameters V, $\alpha$ to be supplied at input to the first computing block 30. At this point, the main processing device 11 re-iterates again the steps described in blocks 100-220.

The apparatus and the simulation method described above are extremely advantageous in so far as they are precise even though they require a low computing power.

Finally, it is clear that modifications and variations may be made to the apparatus and to the method described above, without thereby departing from the scope of the present invention, as defined by the annexed claims.

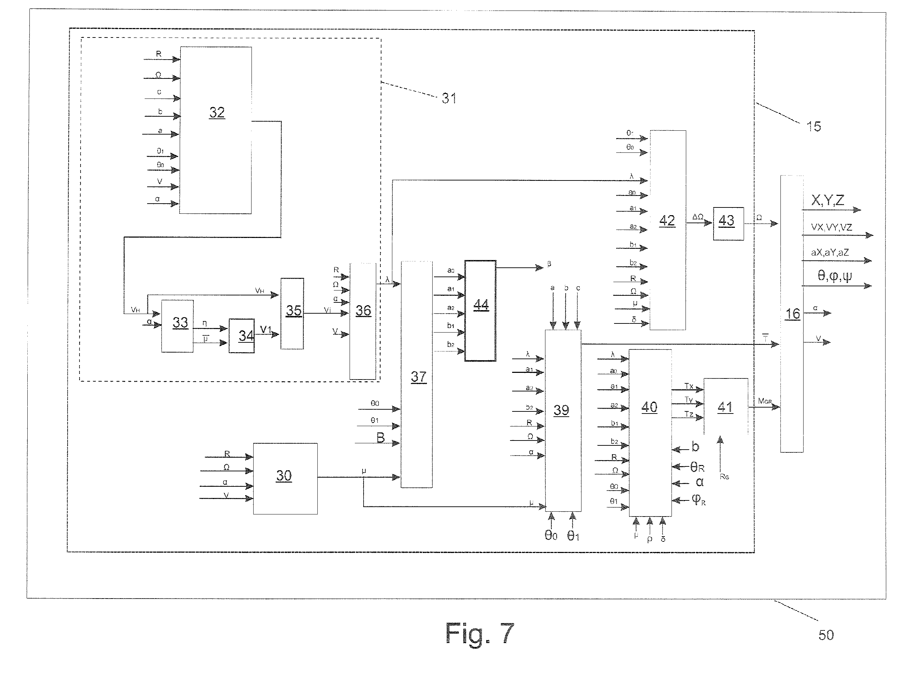

In particular, the embodiment illustrated in Figure 7 regards a main processing device 50, which is similar to the main processing device 11, and the component parts of which will be designated, wherever possible, by the same reference numbers that designate corresponding parts of the main processing device 11 itself.

In particular, according to the embodiment illustrated in Figure 7, the main processing device 50 is able to implement the simulation of the dynamic behaviour of the rotor 3 in a condition in which the aerodynamic lift of the rotor 3 itself in the area of reverse flow is negative.

In this case the third computing block 37 of the main processing device 11 is replaced by a ninth computing block 44 of the main processing device 50, which determines the coefficients $a_0$, $a_1$, $a_2$, $b_1$, $b_2$ for calculation of the flapping angle $\beta$ via the following relations:

$$a_0 = K \ ((1/4)\theta_0(1 + \mu^2) + \lambda/3)/(I*\Omega^2);$$

$$a_1 = 4(1 + (1/2)\mu^2)((2qI\Omega/K) - \mu((2/3)\theta_0 + (\lambda/2));$$

$$b_1 = -4(1 + (1/2)\mu^2)(2pI \ \Omega/K + (1/3)\mu a_0);$$

$$a_2 = ((1/4)\mu^2\theta_0 + (1/3)\mu a_1 + K((1/4)\mu^2 a_0 + (1/3)\mu b_1)/(6\Omega^2 I))/(3\Omega^2 I$$
$$/K + K/12\Omega^2 I))$$

$$b_2 = ((1/4)\mu^2 a_0 + (1/3)\mu b_1 + K((1/4)\mu^2\theta_0 + (1/3)\mu a_1)/(6\Omega^2 I))/((3\Omega^2 I)$$
$$/K + K/(12\Omega^2 I))$$

where:

I is the moment of inertia;

$$K = (1/2)\rho a c R^4 \ \Omega^2$$

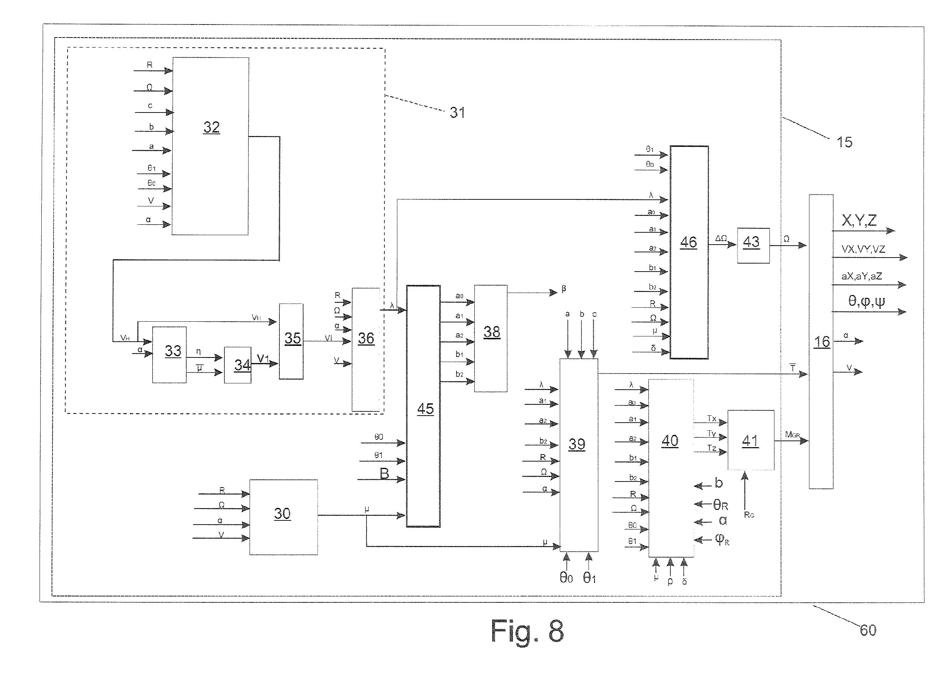

The embodiment illustrated in Figure 8 regards a main processing device 60, which is similar to the main processing device 11, and the component parts of which will be designated, wherever possible, by the same reference numbers that designate corresponding parts of the main processing device 11 itself.

In this case, the third computing block 37 of the main processing device 11 is replaced by an eleventh computing block 45, which calculates the aerodynamic lift T of the rotor 3 via the following relation:

$$T = (1/2)(\rho a b c \Omega^2 R^3)(\lambda/2) + (\theta_0/3)(1 + (3/2)\mu^2) + (\theta_1/4)(1 + \mu^2)$$
$$+ (1/4)$$
$$\mu a_1 + (1/4)\mu^2 b_2)$$

Furthermore, in this case, the eighth computing block 42 of the main processing device 11 is replaced by a twelfth computing block 46, which determines the variation $\Delta\Omega$ of the velocity $\Omega$ via the following relation:

$$Id\Omega/dt = 1/2 \ \ \rho a b c \ \ \Omega^2 R^4 \ \ (\lambda^2/2 + \lambda(\theta_c/3 \ + \ \theta_1/4) \ - \ 1/2\mu a_1(\theta_0/3$$
$$+ \ \theta_1/4 + \lambda) \ - \ 1/2\mu^2 \ b_2(\theta_0/2 + \theta_1/3) + 1/8(a_1^2 + b_1^2 + 4a_2^2 + 4b_2^2)$$
$$+ \ 1/2\mu^2(1/2a_0^2 + 3/8a_1^2 + 1/8b_1^2 + 1/4a_2^2 + 1/4b_2^2 + 1/2a_0a_2) + 1/3$$
$$\mu(a_0b_1 + 1/2a_1b_2 - b_1a_2) - \rho/4a(1 + \mu^2)).$$

## Claims

1. A computer-implemented method for simulating a dynamic behaviour of the motion of an autorotating rotor (3) in an autogyro vehicle (1), **characterised in that** a consecutive series of simulation cycles is implemented, wherein each simulation cycle is configured to compute a lift (T) that may be generated by the autorotating rotor (3) as a function of:

   - a first parameter ($\lambda$) corresponding to a difference between the wind/air speed computed along a rotation axis of the rotor (3) and an induced vehicle speed (Vi);

- a second parameter ($\mu$) corresponding to the wind/air speed along a rotation plane of the rotor (3);
- a series of preset parameters (a, b, c, $\theta_0$, $\theta_1$,B) related to mechanical characteristics of the rotor (3); and
- a series of flapping coefficients ($a_0$, $a_1$, $a_2$, $b_1$, $b_2$) related to a flapping angle ($\beta$) of blades (4) of the rotor (3).

2. The method according to claim 1, wherein each simulation cycle is configured to compute the flapping angle ($\beta$) of the blades (4) of the rotor (3) as a function of the first ($\lambda$) and second ($\mu$) parameters and of the parameters (a,b,c, $\theta_0$,$\theta_1$,B) related to mechanical characteristics of the rotor (3).

3. The method according to claim 1 or 2, wherein each simulation cycle is configured to compute a variation ($\Delta\Omega$) of angular speed ($\Omega$) of the rotor (3) as a function of the first ($\lambda$) and second ($\mu$) parameter, the angular speed ($\Omega$) of the rotor (3) and a series of flapping coefficients ($a_0$, $a_1$, $a_2$, $b_1$, $b_2$) related to the flapping angle ($\beta$).

4. The method according to any of the preceding claims, wherein each simulation cycle is configured to compute the lift (T) through the following relation:

$$T = 0.5 * bc\rho\Omega^2 R^3 \{ \ \frac{1}{2}\lambda(B^2 + \frac{1}{2}\mu^2) + \theta_0(\frac{1}{3}B^3 + \frac{1}{2}\mu^2 B - \frac{4}{9\pi}\mu^3) + $$

$$\theta_1(\frac{1}{4}B^4 + \frac{1}{4}\mu^2 B^2 - \frac{1}{32}\mu^4) + \frac{1}{4}\mu^2 b_2 B + \frac{1}{8}\mu^3 a_1 \ \}$$

wherein "b" represents the number of blades of the rotor (3); "c" represents the mean chord of the blade; "B" is a preset coefficient; "$\rho$" represents air density; "$a_1$" and "$b_2$" are a pair of flapping coefficients related to the flapping angle ($\beta$).

5. The method according to claim 4, wherein each simulation cycle is configured to compute three components (Tx, Ty,Tz) of the lift (T) with respect to a preset vehicle reference system (XYZ) through the following relations:

$$T_{X=} -K_T \sin\theta_R ((\theta_0/3)(1+3/2(\mu^2)) + (\theta_1/4)(1+\mu^2) + (\lambda/2) -$$

$$1/4\mu^2 b_2) + (K_T \cos\gamma(\theta_0(1/3a_1 + 1/2\mu(\lambda + 3/4b_2) - 1/8\mu^2 b_1) + 1/2\lambda((3/2)a_1 -$$

$$1/2\mu b_2) + (1/4)(a_1 b_2 - a_2 b_1) - (1/6)b_1 a_0 - (1/4)\mu(a_0 a_2 + a_0^2 + a_1^2 + \tfrac{1}{2}(a_2^2 + b_2^2) -$$

$$(1/4)\rho bc\delta\Omega^2 R^3 \mu)\cos\theta_R$$

$$T_Y = - K_T \sin\varphi_R (\theta_0/3(1 + (3/2)\mu^2) + (\theta_1/4)(1 + \mu^2) + (\lambda/2) -$$

$$(1/4)\mu^2 b_2) - (K_T(\theta_0((1/3)b_1 + (1/4)\mu(a_0 + (5/4)a_2) + (1/2)\mu^2 b_1) -$$

$$\lambda((1/2) b_1 + \mu(a_0 + (1/2)a_2) + (1/6)(a_1 a_2 + b_1 b_2 - a_0 a_1) +$$

$$(1/2)\mu(2a_0 b_2 + (3/4)a_1 b_1) + (1/4)\mu^2(3a_0 a_1 + 2a_1 a_2 + 3/2a_0 b_1))\cos\varphi_R$$

$$T_Z = T$$

wherein $K_T = (1/2)\,\rho abc\Omega^2 R^3$

6. The method according to any of claims 1 to 3, wherein each simulation cycle is configured to compute the lift (T) through the following relation:

```
T=(1/2)(ρabcΩ²R³)(λ/2)+(θ₀/3)(1+(3/2)μ²)+(θ₁/4)(1+μ²)+ (1/4)μ*a₁+
```

```
(1/4)μ²b₂);
```

wherein "a" represents a lift coefficient of an infinitesimal portion of the blade (4); "b" represents the number of blades; "c" represents the mean chord of the blade; "B" is a preset coefficient; "ρ" represents the density of air; "$a_1$" and "$b_2$" are a pair of flapping coefficients related to the flapping angle (β).

7. The method according to any of claims 2 to 6, wherein each simulation cycle is configured to compute the flapping angle (β) through the following relation:

```
β = a₀ + a₁*cosψ + b₁*sinψ + a₂*cos 2ψ + b₂*sin 2ψ.
```

wherein $a_0$, $a_1$, $a_2$, $b_1$, $b_2$ are the flapping coefficients.

8. The method according to claims 4 and 7, wherein each simulation cycle is configured to compute the flapping coefficients ($a_0$, $a_1$, $a_2$, $b_1$, $b_2$) related to the flapping angle (β) through the following relations:

$$a_o = \frac{1}{2}\gamma\left\{\frac{1}{3}\lambda B^3 - \frac{1}{4}\theta_0 B^4 - \frac{1}{5}\vartheta_1 B^5\right\}$$

$$a_1 = -\frac{2\mu}{B^4}\left\{\lambda B^2 - \frac{4}{3}\theta_0 B^3 - \theta_1 B^4\right\}$$

$$b_1 = -\frac{4\mu}{3B}a_o$$

$$a2 = -\frac{\gamma\mu^2}{144+\gamma^2 B^8}\left\{\lambda B(16+\frac{7}{108}\lambda^2 B^8) - \theta_0 B^2(\frac{46}{3}+\frac{7}{144}\lambda^2 B^8) - \theta_1 B^8(12+\frac{7}{180}\gamma^2 B^8)\right\}$$

$$b_2 = \frac{\lambda^2\mu^2}{144+\lambda^2 B^8}\left\{\frac{5}{9}\lambda B^5 + \frac{25}{36}\theta_0 B^6 + \frac{8}{15}\theta_1 B^7\right\}$$

9. The method according to claims 6 and 7, wherein each simulation cycle is configured to compute the flapping coefficients ($a_0$, $a_1$, $a_2$, $b_1$, $b_2$) related to the flapping angle ($\beta$) through the following relations:

$$a_0 = K \ ((1/4)\theta_0(1+\mu^2)+\lambda/3)/(I*\Omega^2)$$

$$a_1 = 4(1+(1/2)\mu^2)((2qI\Omega/K)-\mu((2/3)\theta_0+(\lambda/2)))$$

$$b_1 = -4(1+(1/2)\mu^2)(2pI\ \Omega/K+(1/3)\mu a_0)$$

$$a_2 = ((1/4)\mu^2\theta_0+(1/3)\mu a_1\ +K((1/4)\mu^2 a_0\ +$$
$$(1/3)\mu b_1)/(6\Omega^2 I))/(3\Omega^2 I/K+K/(12\Omega^2 I))$$

$$b_2 = ((1/4)\mu^2 a_0+(1/3)\mu b_1+K((1/4)\mu^2\theta_0+(1/3)\mu a_1)/(6\Omega^2 I))/$$
$$((3\Omega^2 I)/K+K/(12\Omega^2 I))$$

wherein K = $(1/2)\rho acR^4\ \Omega^2$

10. The method according to claim 8, wherein each simulation cycle is configured to compute the variation ($\Delta\Omega$) of angular speed ($\Omega$) through the following equation:

$$\lambda^2(\frac{1}{2}B^2-\frac{1}{4}\mu^2)+\lambda(\frac{1}{3}\theta_0 B^3+\frac{2}{9\pi}\mu^2\theta_0+\frac{1}{4}\theta_1 B^4+\frac{1}{32}\mu^4\theta_1)+\mu\lambda a_1(\frac{1}{2}B^2-\frac{3}{8}\mu^2)+$$
$$a_0^{\ 2}(\frac{1}{4}\mu^2 B^2-\frac{1}{16}\mu^4)-\frac{1}{3}\mu a_0 b_1 B^3+a_1^{\ 2}(\frac{1}{8}B^4+\frac{1}{16}\mu^2 B^2)+b_1^{\ 2}(\frac{1}{8}B^4+\frac{1}{16}\mu^2 B^2)-$$
$$a_2(\frac{1}{4}\mu^2 a_0 B^2+\frac{1}{6}\mu b_1 B^8)+\frac{1}{2}a_2 B^4+b_2(\frac{1}{8}\mu^2\theta_0 B^2+\frac{1}{12}\mu^2\theta_1 B^3+\frac{1}{6}\mu a_1 B^3)+$$
$$\frac{1}{2}b_2 B^4-\frac{\delta}{4a}(1+\mu^2-\frac{1}{8}\mu^4)=2I(\frac{d\Omega/dt}{\Omega^2 R^4 abc\rho})$$

wherein "$\theta_0$" represents the pitch angle of the blade on the rotor; "$\theta_1$" represents the overall angular pitch setting variation; "a" represents the lift coefficient of an infinitesimal portion of said blade (4); "$\delta$" represents a drag coefficient of the blade; "R" is the radius of said rotor (3).

11. The method according to claim 9, wherein each simulation cycle is configured compute the variation ($\Delta\Omega$) of angular speed ($\Omega$) through the following equation:

$$Id\Omega/dt = 1/2\ \rho abc\ \Omega^2 R^4\ (\lambda^2/2\ +\ \lambda(\theta_0/3+\ \theta_1/4)\ -1/2\mu a_1(\theta_0/3+$$

$$\theta_1/4\ +\lambda)\ -\ 1/2\mu^2\ b_2(\theta_0/2+\ \theta_1/3)\ +1/8(a_1{}^2+b_1{}^2+4a_2{}^2\ +\ 4b_2{}^2)$$

$$+1/2\mu^2(1/2a_0{}^2\ +\ 3/8a_1{}^2+1/8b_1{}^2+1/4a_2{}^2+1/4b_2{}^2\ +\ 1/2a_0a_2)\ +\ 1/3\mu(a_0b_1\ +$$

$$1/2a_1b_2\ -\ b_.a_2)\ -\ \rho/4a(1+\ \mu^2)).$$

wherein "$\theta_0$" represents the pitch angle of the blade on the rotor; "$\theta_1$" represents the overall angular pitch setting variation; "a" represents the lift coefficient of an infinitesimal portion of said blade (4); "δ" represents a drag coefficient of the blade; "R" is the radius of said rotor (3).

12. The method according to any of the preceding claims, wherein each simulation cycle is configured to compute the second parameter ($\mu$) through the following relation:

$$\mu\ =\ Vcos\alpha/\Omega R$$

wherein $\alpha$ is the angle of attack of the rotor (3), V is the speed corresponding to the True Air Speed (TAS) by which the autogyro vehicle (1) is invested by wind/air.

13. The method according to any of the preceding claims, wherein each simulation cycle is configured to compute the first parameter ($\lambda$) as a function of a speed induced on the vehicle ($V_H$) in hovering conditions; the speed induced on the vehicle ($V_H$) being computed through the following relation:

$$V_H\ =\ \frac{abc\Omega}{16\pi}\ (\sqrt{1+\left(\frac{64\pi}{abc}\left(\frac{R\vartheta_0}{3}+\frac{R\theta_1}{4}+\frac{V\sin\alpha}{2\Omega}\right)\right)}-1)$$

14. The method according to claim 13, wherein each simulation cycle is configured to compute a fourth parameter ($\eta$) and a fifth parameter ($\overline{\mu}$) through the following relations:

$$\eta = V\sin\alpha/V_H;$$

$$\overline{\mu} = V\cos\alpha/V_H.$$

15. The method according to claim 14, wherein each simulation cycle is configured to compute a sixth parameter ($v_1$) through the following equation:

$$v_1\sqrt{\left(\frac{\eta}{2.71(1+\overline{\mu}^2)}\right)^2+\overline{\mu}^2+(\eta+v_1)^2}=1$$

16. The method according to claim 15, wherein each simulation cycle is configured to compute the vehicle induced speed (Vi) as a function of the sixth parameter ($\nu_1$) through the following relation:

$$V_i \;=\; V_{H*}\boldsymbol{\nu}_1$$

17. The method according to claim 16, wherein the simulation cycle is configured to compute the first parameter ($\lambda$) through the following relation:

$$\lambda \;=\; (V\sin\ \alpha\ -\ Vi)/\Omega R.$$

18. A software product loadable in a memory of a computer and configured to implement, when running, the simulating method according to any one of claims 1 to 17.

19. An electronic device for simulating a dynamic behaviour of the motion of an autorotating rotor in an autogyro vehicle comprising at least one blade, configured so as to implement a method according to any one of claims 1 to 17.

Fig. 1

Fig. 2

Fig. 3

EP 2 202 710 A1

Fig.4

Process parameters $V$, $\alpha$, $\Omega$ and $R$ to determine parameter $\mu$

Process $\theta_0$, $\theta_1$, a, b, c, R, and parameter $\Omega$ to determine induced speed in hovering $V_H$

110

100

Process induced speed in hovering $V_H$ and parameter $\alpha$ to determine $\eta$ and $\overline{\mu}$

130

Process parameters $\eta$ and $\overline{\mu}$ to determine parameter $v_l$

140

Process parameter $v_l$ and induced speed in hovering $V_H$ to determine speed $Vi$

150

Process induced speed $Vi$, radius $R$, velocity $\Omega$, angle $\alpha$ and true speed $V$ to determine $\lambda$

160

Process parameters $\lambda$, $\mu$, $\theta_0$, $\theta_1$, B to determine a series of coefficients $a_0$, $a_1$, $a_2$, $b_1$, $b_2$

170

Process coefficients $a_0$, $a_1$, $a_2$, $b_1$, $b_2$, to determine flapping angle $\beta$

180

Process parameters a,b,c, $\lambda$,$\beta$,$\Omega$,$\alpha$, $a_0$, $a_1$, $a_2$, $b_1$, $b_2$, R,$\mu$, $\theta_0$, $\theta_1$ to determine lift $T$ of rotor calculated along the axis of rotation

190

Process lift $T$ of rotor , and $\theta_R$, $\theta_P$, to determine the three components of lift $T$ in directions x, y and z

200

Process the three components of lift $T$ and parameter $R_G$ to determine momentum $M_{RG}$

210

Determine variation $\Delta\Omega$ of velocity $\Omega$

220

Fig. 5

Fig. 6

Fig. 7

Fig. 8

Europäisches
Patentamt

European
Patent Office

Office européen
des brevets

**EUROPEAN SEARCH REPORT**

Application Number

EP 09 18 0875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 93/18966 A1 (SEGO TOOL INC [US]) 30 September 1993 (1993-09-30) * the whole document * ----- | 1-19 | INV. G09B9/02 |
| X | US 4 653 705 A (BENSEN IGOR B [US]) 31 March 1987 (1987-03-31) * the whole document * ----- | 1-19 | |
| X | US 5 304 036 A (GROEN HENRY J [US] ET AL) 19 April 1994 (1994-04-19) * the whole document * ----- | 1-19 | |
| | | | **TECHNICAL FIELDS SEARCHED (IPC)** G09B |

The present search report has been drawn up for all claims

| Place of search | Date of completion of the search | Examiner |
|---|---|---|
| Munich | 22 April 2010 | Lopes Margarido, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 18 0875

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2010

| Patent document cited in search report | | Publication date | Patent family member(s) | | Publication date |
|---|---|---|---|---|---|
| WO 9318966 | A1 | 30-09-1993 | AT | 160540 T | 15-12-1997 |
| | | | AU | 3936493 A | 21-10-1993 |
| | | | BR | 9306149 A | 23-06-1998 |
| | | | CA | 2132839 A1 | 30-09-1993 |
| | | | DE | 69315427 D1 | 08-01-1998 |
| | | | DE | 69315427 T2 | 02-07-1998 |
| | | | EP | 0631553 A1 | 04-01-1995 |
| | | | ES | 2111744 T3 | 16-03-1998 |
| | | | JP | 7505106 T | 08-06-1995 |
| US 4653705 | A | 31-03-1987 | NONE | | |
| US 5304036 | A | 19-04-1994 | NONE | | |

EPO FORM P0459

For more details about this annex : see Official Journal of the European Patent Office, No. 12/82